# FASCICULE DE BREVET EUROPEEN

(11) **EP 4 394 444 B1**
(45) Date de publication et mention de la délivrance du brevet: **27.05.2026**
(21) Numéro de dépôt: 23218080.2
(22) Date de dépôt: 19.12.2023
(51) Int. Cl.: G08G 5/22, G08G 5/26, G08G 5/53, G08G 5/56, G08G 5/72, G01S 13/78, G01S 13/91, G08G 5/55, G01S 13/93, G01S 7/40

(54) **CHAÎNE DE RÉCEPTION IFF/ADS-B**
FIFF/ADS-B-EMPFANGSKETTE
IFF/ADS-B RECEIVING CHAIN

(30) Priorité: 29.12.2022 FR 2214616
(43) Date de publication de la demande: 03.07.2024
(73) Titulaire: THALES, 92190 Meudon (FR)
(72) Inventeur: GUILLOU, Ewen, 49309 CHOLET (FR); HOGOMMAT-CHABROT, Laure, 53005 LAVAL Cedex (FR)
(74) Mandataire: Atout PI Laplace

(56) Documents cités:
- CN-A- 109 379 102
- FR-A1- 3 109 451
- US-A1- 2003 233 192
- MANSOUR R R ET AL: "Multiband superconducting filters", 2016 IEEE MTT-S INTERNATIONAL MICROWAVE SYMPOSIUM (IMS), IEEE, 22 May 2016 (2016-05-22), pages 1 - 4, XP032941266, DOI: 10.1109/MWSYM.2016.7540242
- HELFRICK A: "A surveillance receiver for evaluating mode A/C/S activity", DIGITAL AVIONICS SYSTEMS CONFERENCE, 1995., 14TH DASC CAMBRIDGE, MA, USA 5-9 NOV. 1995, NEW YORK, NY, USA,IEEE, US, 5 November 1995 (1995-11-05), pages 13 - 18, XP010154152, ISBN: 978-0-7803-3050-4, DOI: 10.1109/DASC.1995.482799

## Description

### Domaine technique :

L'invention se situe dans le domaine des dispositifs de contrôle aérien et d'anticollisions pour le trafic aérien. Elle porte plus spécifiquement sur une chaîne de réception configurée pour permettre la réception simultanée d'interrogations IFF (sigle anglais pour *Identification Friend of Foe*, ou identification ami ennemi) et d'interrogations ADS-B (sigle anglais pour *Automatic Dependent Surveillance-Broadcast)*, tout en assurant des contraintes fortes de rejection de signaux tiers.

### Technique antérieure :

L'IFF est un système d'identification chiffré d'aéronefs, permettant aux radars d'approche civils ou militaire de reconnaitre les avions coopérants, dits « amis », et de déterminer leur cap et distance. L'IFF est également utilisé en vol dans des avions militaires pour identifier les avions amis et ennemis. Les interrogations IFF sont faites par des stations sol ou des aéronefs sur une bande de fréquence centrée autour de la fréquence 1030 MHz, typiquement de 14 MHz.

L'ADS-B est un système de surveillance coopératif pour le contrôle de trafic aérien. Un avion équipé de l'ADS-B détermine sa position par un système de positionnement par satellite (GNSS, sigle anglais pour *Global Navigation Satellite System*) et l'envoie périodiquement aux stations sol et aux autres appareils évoluant à proximité. La cadence d'émission de la position dépend de la phase du vol. Les émissions ADS-B se font sur une bande de fréquence centrée autour de la fréquence 1090 MHz, typiquement de 16 MHz.

La plupart des aéronefs, en particulier les avions, embarquent les équipements nécessaires pour implémenter ces deux standards, en particulier les équipements nécessaires pour écouter l'IFF sur la fréquence 1030 MHz et l'ADS-B sur la fréquence 1090 MHZ.

Ces équipements de réception sont soumis à des contraintes fortes de performances par les normes DO-260 B ou C (pour l'ADS-B), AIMS 03-1000 (pour l'IFF), et ED73 E ou F (ADS-B). Les contraintes portent en particulier sur des niveaux de rejection minimum pour les chaînes radio de réception. En particulier, les niveaux de rejection à atteindre sont très forts (supérieurs à 60 dB) sur la bande 1053 MHz - 1065 MHz qui se trouve entre la fréquence de réception de l'IFF et celle de l'ADS-B.

Afin de répondre à ces contraintes fortes de rejection, les aéronefs de l'état de l'art embarquent généralement des équipements distincts pour l'IFF et l'ADS-B. Ces équipements ont des filtres analogiques de tête conçus pour atteindre les niveaux de rejection définis par les normes, en cascadant un nombre important de filtres passe-bande de technologies diverses (cavités céramique, filtres SAW (sigle anglais pour *Surface Acoustic Waves*, ou filtre à ondes de surface), filtres BAW (sigle anglais pour *Bulk Acoustic Wave*, ou filtre à ondes de volume), etc.).

Certains équipements, comme le TSC4000 de Thales, réalisent la réception des interrogations IFF et des messages ADS-B dans le même équipement. Cependant, ces réceptions se font sur deux chaines radio séparées.

Embarquer deux équipements de réception distincts ou deux chaînes de réception séparées dans un aéronef pour réaliser les fonctions de réception IFF et de réception ADS-B a des conséquences évidentes en termes de volume et de poids, qui peuvent ne pas être compatibles d'aéronefs de petites tailles. En outre, la consommation des équipements n'est pas optimale, ce qui est un inconvénient majeur pour les applications de type drone. Enfin, les composants de chaque chaîne de réception sont relativement chers, et plus leur nombre est élevé, plus le cout série est important.

CN 109.379.102 A : « *Multichannel frequency agility R-T unit* » décrit une radio aéro multifonctions, qui vise à réemployer la chaîne RF pour la réception de signaux implémentés selon différents standards de communications (ATC, JIDS, IFF, ADS-B).

Mansour et al. : « Multiband superconducting filters » traite de la réalisation d'un filtre tri-bandes analogique pour transpondeur IFF, passant autour de 1030 MHz et 1090 MHz.

FR 3.109.451 A1 décrit un radar sol assurant d'assurer simultanément des interrogations IFF et la réception de squitters ADS-B.

US 2003/233192 A1 : « *Integrated airbone transponder and collision avoidance system* » présente un poste radio configuré pour recevoir des signaux IFF et ADS-S à 1030MHz et 1090MHz.

Helfrick : « A surveillance receiver for evaluating mode A/C/S activity »*.* Cet article décrit un équipement configuré pour monitorer l'activité IFF dans les bandes de fréquence 1030MHz et 1090MHz.

Un but de l'invention est donc de décrire un équipement disposant d'une seule chaîne de réception permettant de recevoir en continu les interrogations IFF autour de la fréquence 1030 MHz et les émissions ADS-B autour de la fréquence 1090 MHz, tout en respectant les contraintes normatives associées à ces réceptions.

### Résumé de l'invention :

A cet effet, la présente invention décrit une chaîne de réception configurée pour permettre la réception de signaux IFF reçus dans une bande de fréquence centrée sur la fréquence 1030 MHz et de signaux ADS-B reçus dans une bande de fréquence centrée sur la fréquence 1090 MHz, et pour rejeter au moins une bande de fréquence comprise entre la fréquence 1030 MHz et la fréquence 1090 MHz. La chaîne de réception selon l'invention comprend :
- une antenne de réception configurée pour recevoir un signal radiofréquence dans une bande de fréquence comprenant les fréquences 1030 MHz et 1090 MHz,
- une partie analogique avec :
   ∘ un dispositif de filtrage bi-bande configuré pour filtrer le signal radiofréquence acquis sur l'antenne de réception en étant passant autour des bandes de fréquences des signaux IFF et ADS-B tout en rejetant ladite bande de fréquence comprise entre la fréquence 1030 MHz et la fréquence 1090 MHz,
   ∘ un amplificateur faible bruit configuré pour amplifier le signal radiofréquence filtré par ledit dispositif de filtrage bi-bande,
   ∘ un mélangeur configuré pour mélanger le signal amplifié par l'amplificateur faible bruit avec un signal sinusoïdal de manière à transposer les signaux reçus sur les bandes de fréquence des signaux IFF et ADS-B vers des bandes de fréquences inférieures,
   ∘ un convertisseur analogique-numérique configuré pour numériser les signaux reçus sur lesdites bandes de fréquences inférieures.

Elle comprend également une partie numérique configurée pour dupliquer le signal numérisé, et pour traiter les signaux dupliqués respectivement sur :
- un premier chemin comprenant un premier dispositif de filtrage et un premier dispositif de transposition de fréquence, configurés pour filtrer et transposer vers une fréquence de travail les signaux reçus autour des bandes de fréquences correspondant aux signaux IFF transposés par ledit mélangeur, et comprenant en outre des moyens de traitement des signaux IFF,
- un deuxième chemin comprenant un deuxième dispositif de filtrage et un deuxième dispositif de transposition de fréquence, configurés pour filtrer et transposer vers une fréquence de travail les signaux reçus autour des bandes de fréquences correspondant aux signaux ADS-B transposés par ledit mélangeur, et comprenant en outre des moyens de traitement des signaux ADS-B.

Selon un mode de réalisation de la chaîne de réception selon l'invention, le dispositif de filtrage bi-bande est un filtre bi-bande.

Selon un mode de réalisation de la chaîne de réception selon l'invention, le dispositif de filtrage bi-bande est configuré pour rejeter d'au moins 30dB les signaux reçus dans ladite bande de fréquence comprise entre la fréquence 1030 MHz et la fréquence 1090 MHz.

Avantageusement, le dispositif de filtrage bi-bande, le premier dispositif de filtrage et le deuxième dispositif de filtrage sont configurés pour rejeter ensemble d'au moins 60dB des signaux reçus en dehors des bandes de fréquences de réception des signaux IFF et ADS-B.

Selon un mode de réalisation de la chaîne de réception selon l'invention, la bande de fréquence comprise entre la fréquence 1030 MHz et la fréquence 1090 MHz comprend la bande de fréquences 1053 MHz - 1065 MHz.

Selon un mode de réalisation de la chaîne de réception selon l'invention, le signal sinusoïdal utilisé par le mélangeur pour mélanger le signal amplifié par l'amplificateur faible bruit est un signal sinusoïdal dont la fréquence est sensiblement égale à 1050 MHz ou 1070 MHz.

Selon un mode de réalisation, la chaîne de réception selon l'invention comprend en outre un ou plusieurs filtres passe-bande ou passe-bas configurés pour rejeter des raies d'intermodulation générées par au moins un parmi le mélangeur, le premier dispositif de transposition de fréquence et le deuxième dispositif de transposition de fréquence.

Selon un mode de réalisation, la chaîne de réception selon l'invention comprend en outre des moyens de suréchantillonnage et d'ajustement du niveau de puissance des signaux numérisés par le convertisseur analogique-numérique.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 représente un synoptique fonctionnel d'une chaîne de réception 100 selon un mode de réalisation de l'invention.
- la figure 2 donne un exemple de gabarit de filtre analogique bi-bande pouvant être utilisé pour la mise en œuvre d'un récepteur selon un mode de réalisation de l'invention.

### Description détaillée :

Il existe plusieurs manières de réaliser une chaine de réception IFF ou ADS-B. Dans tous les cas, le signal radio, qu'il soit centré autour de la fréquence de 1030 MHz ou de la fréquence 1090 MHz, est filtré puis amplifié à l'aide d'un amplificateur faible bruit, puis filtré à nouveau, les filtres étant nécessaires pour la tenue des contraintes de rejections des normes DO-260, AIMS 03-1000 et l'ED73. Le signal est ensuite soit directement numérisé, soit converti en un signal vidéo puis numérisé.

Les récepteurs peuvent être hétérodynes ou homodynes, et la numérisation du signal est faite en fréquence intermédiaire basse, soit directement sur le signal radio, soit sur un signal vidéo produit à partir du signal radio.

La solution historique consiste à réaliser une réception hétérodyne du signal, à le convertir en un signal vidéo sur une fréquence intermédiaire basse, puis à numériser le signal vidéo. La conversion du signal en un signal vidéo consiste à travailler uniquement sur l'enveloppe logarithmique du signal. L'intérêt de cette solution est qu'elle est bas coût et peu gourmande en traitements, c'est pourquoi c'est une solution encore utilisée, malgré son encombrement.

Une autre solution consiste à numériser directement les signaux **IFF** ou ADS-B sur leur fréquence porteuse, grâce à des CAN très puissants et très performants. Cette solution est cependant chère à mettre en œuvre, et fait que les CAN sont considérés comme des composants complexes critiques devant répondre à des contraintes de certification spécifiques à l'aéronautique (norme DO-284), c'est pourquoi elle est peu déployée dans les composants aéro.

Les solutions plus récentes consistent à numériser l'ensemble du signal radio reçu sous la forme de signaux I/Q. Ces solutions, qu'elles soient issues d'une réception hétérodyne ou d'une réception homodyne, permettent de mettre en œuvre des traitements numériques plus puissants puisqu'il n'y a pas de perte d'information lié à la conversion du signal en un signal vidéo.

Concevoir une chaîne radio permettant la réception simultanée des signaux IFF et ADS-B, avec un filtrage stable dans les bandes de fréquences d'intérêt et respectant les contraintes normatives sur les niveaux de rejection des signaux en dehors de ces bandes, se révèle être particulièrement difficile. En effet, s'il est possible de concevoir des filtres analogiques permettant d'atteindre les niveaux de rejection souhaités autour de l'une ou l'autre des bandes de fréquences IFF ou ADS-S, concevoir des filtres analogiques passants et stables simultanément autour des deux fréquences d'intérêt tout en garantissant les niveaux de réjection requis (supérieure à 60dB) à l'extérieur de ces bandes, et en particulier dans la bande de fréquence intermédiaire, requiert l'utilisation de filtres d'ordres particulièrement élevés. De tels filtres sont particulièrement complexes et couteux à produire, présentent des problèmes d'ondulation dans la bande, et ont un poids et un volume importants.

La réalisation d'un filtre numérique d'ordre élevé passant et stable sur les deux bandes de fréquences d'intérêt et ayant les propriétés de rejection souhaitées est théoriquement possible. Cependant, un tel filtre serait positionné dans la chaîne de réception après le CAN (Convertisseur Analogique-Numérique), qui par conséquent ne serait pas protégé contre les émissions de fort niveau ayant lieu dans des bandes de fréquences proches de celles de l'IFF et de l'ADS-B, en particulier celles reçues dans la bande de fréquence située entre les deux bandes d'intérêt. Ces émissions non rejetées peuvent avoir pour effet de faire travailler le CAN à saturation. En pratique, la saturation du CAN conduit à une distorsion non linéaire qui *a minima* crée un bruit spectral large bande, ce qui détruit la dynamique du récepteur, et au pire va entrainer une détérioration de celui-ci.

Afin de pallier les défauts de l'état de l'art, et compte tenu des contraintes présentées ci-dessus, l'invention définit une chaîne de réception radio hybride analogique-numérique présentant :
- un premier niveau de filtrage analogique bi-bande, destiné à apporter une partie de la rejection souhaitée des signaux situés en dehors des bandes d'intérêt, en particulier ceux reçus entre le signal IFF et le signal ADS-B, afin d'éviter la saturation du CAN lié à des rayonnements non essentiels, puis
- un deuxième niveau de filtrage numérique, adapté à l'un ou l'autre des signaux d'intérêt, configuré de sorte que les deux niveaux de filtrage permettent ensemble d'atteindre les exigences normatives.

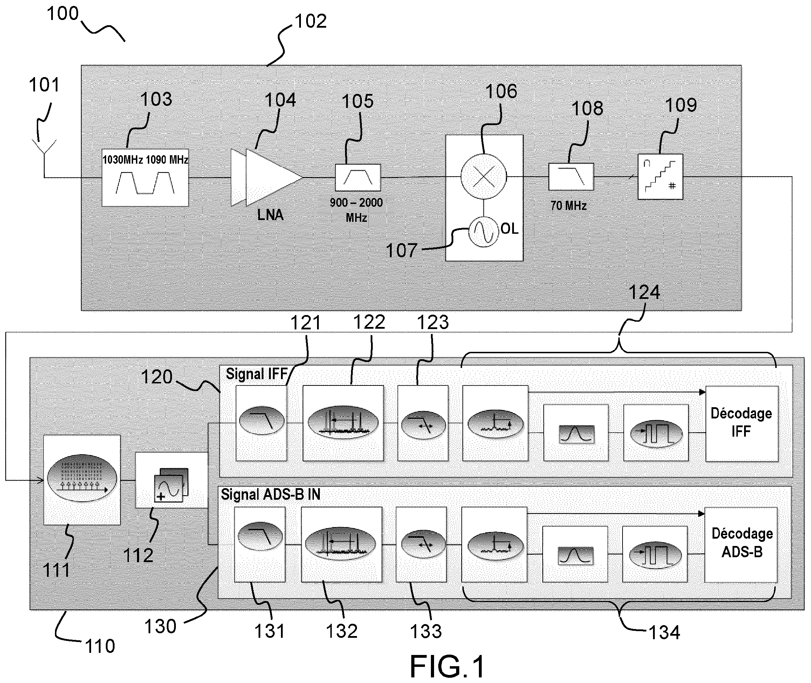

La figure 1 représente un synoptique fonctionnel d'une chaîne de réception 100 selon un mode de réalisation de l'invention, permettant la réception simultanée de signaux IFF (1030 MH) et ADS-B (1090 MHz).

Elle comprend une antenne de réception 101, configurée pour recevoir un signal radiofréquence dans une bande de fréquence comprenant les signaux IFF et ADS-B, c'est-à-dire les fréquences 1030 MHz et 1090 MHz.

Elle comprend ensuite une partie analogique 102 configurée pour apporter des traitements de têtes aux signaux reçus, jusqu'à leur numérisation.

A ce titre, la partie analogique 102 de la chaîne radio 100 selon un mode de réalisation de l'invention comprend un dispositif 103 de filtrage bi-bande configuré pour filtrer le signal radiofréquence acquis sur l'antenne de réception 101, passant autour des bandes de fréquences des signaux IFF (centrés autour de 1030 MHz) et ADS-B (centrés autour de 1090 MHz) et rejetant les signaux à l'extérieur de ces bandes, en particulier ceux situés dans la bande de fréquence intermédiaire.

Selon un mode de réalisation de l'invention, le dispositif 103 de filtrage bi-bande peut comprendre un ou plusieurs filtres analogiques passe-bande cascadés, destinés à filtrer le signal autour de la bande de fréquences IFF (1030 MHz), et autour de la bande de fréquences ADS-B (1090 MHz).

Selon un autre mode de réalisation, le dispositif 103 de filtrage bi-bande peut être réalisé par un diplexeur (néologisme issu de l'anglais *diplexer*) séparant le signal en deux voies, chaque voie étant filtrée à l'aide d'un filtre passe-bande destiné à filtrer les signaux autour des bandes de fréquences IFF (1030 MHz) et ADS-B (1090MHz), par exemple les filtres BAW 880367 et 880374 de chez QORVO. Les deux voies sont ensuite recombinées à l'aide d'un combineur (en anglais *combiner*)*.* Le diplexeur et le combineur sont réalisés de manière à garantir la bonne adaptation de chaque voie par rapport à l'autre aux deux fréquences d'intérêt IFF (1030 MHz) et ADS-B (1090MHz), par exemple, à l'aide de lignes quart d'onde, chargées ou non.

Selon un autre mode de réalisation de l'invention, plus avantageux car plus compact et plus simple à réaliser, le dispositif 103 de filtrage bi-bande peut prendre la forme d'un filtre radio analogique bi-bande. Ce filtre analogique contribue à la réjection des signaux hors des bandes IFF et ADS-B, mais n'est pas tenu par les contraintes définies par les normes, c'est pourquoi son gabarit peut être plus relâché, rendant ainsi la réalisation d'un tel filtre analogique possible.

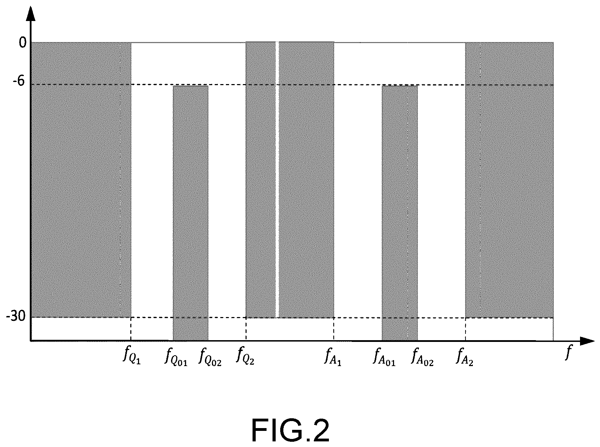

La figure 2 donne un exemple de gabarit de filtre analogique bi-bande 103 pouvant être utilisé pour la mise en œuvre d'un récepteur selon un mode de réalisation de l'invention.

Ce filtre est défini comme passant entre les fréquences f_{Q1} = 1005 MHz et f_{Q2} = 1055 MHz, soit dans la bande de fréquences associée à la réception des signaux IFF. L'oscillation des signaux dans la sous bande f_{Q01} = 1016 MHz à f_{Q01} = 1044 MHz est limitée à 6dB, de manière à minimiser les déformations du signal IFF.

Ce filtre est également défini comme passant entre les fréquences f_{A1} = 1065 MHz et f_{A2} = 1115 MHz, soit dans la bande de fréquences associée à la réception des signaux ADS-B. L'oscillation des signaux dans la sous bande f_{Q01} = 1076 MHz à f_{Q01} = 1104 MHz est limitée à 6dB, de manière à minimiser les déformations du signal ADS-B.

A l'extérieur de ces deux bandes de fréquences, le niveau de réjection du filtre est supérieur à 30 dB, en particulier dans la bande de fréquences 1055 MHz - 1063 MHz, ce qui permet d'assurer une réjection suffisante pour éviter le phénomène de saturation du CAN par des signaux transmis dans cette bande de fréquences.

La partie analogique 102 de la chaîne radio 100 selon un mode de réalisation de l'invention comprend également un amplificateur faible bruit 104 configuré pour amplifier le signal radiofréquence filtré par le dispositif de filtrage bi-bande 103. Avantageusement, l'amplificateur peut être suivi d'un filtre passe-bande 105 configuré pour rejeter des signaux éloignés des bandes de fréquences d'intérêt. Dans l'exemple de la figure 1, le filtre passe-bande 105 est passant sur une bande de fréquence assez large allant de 900 MHz à 2 GHz.

La partie analogique 102 de la chaîne radio 100 selon un mode de réalisation de l'invention comprend ensuite un mélangeur 106 configuré pour mélanger le signal amplifié par l'amplificateur faible bruit (et éventuellement filtré par le filtre 105) avec un signal sinusoïdal 107, de manière à transposer les signaux reçus sur les bandes de fréquence des signaux IFF et ADS-B vers des bandes de fréquences inférieures pouvant être numérisées par le convertisseur analogique-numérique. Un tel mélangeur est caractéristique d'un récepteur hétérodyne. La fréquence du signal sinusoïdal 107 est choisie de manière à éviter les phénomènes d'entrelacement des raies d'intermodulation IFF et ADS-B.

Une fréquence avantageuse pour le signal sinusoïdal est une fréquence proche de 1050 MHz, qui permet de transposer le signal IFF vers la fréquence 20 MHz et le signal ADS-B vers la fréquence 40 MHz tout en évitant que des raies d'intermodulation apparaissent dans les bandes des fréquences d'intérêt.

Une autre fréquence avantageuse pour le signal sinusoïdal est une fréquence proche de 1070 MHz, qui permet de transposer le signal IFF vers la fréquence 40 MHz et le signal ADS-B vers la fréquence 20 MHz tout en évitant que des raies d'intermodulation apparaissent dans les bandes des fréquences d'intérêt.

D'autres fréquences sont possibles, à l'exception des fréquences proches de 1060 MHz qui auraient pour effet de faire apparaitre des raies d'intermodulation du signal IFF dans la bande de fréquence du signal ADS-B et inversement. En particulier, la fréquence peut être inférieure à la fréquence 1030MHz, ou supérieure à la fréquence 1090 MHz, tant que les fréquences vers lesquels les signaux d'intérêt sont transposés sont compatibles du CAN.

Selon un mode de réalisation avantageux d'une chaîne de réception 100 selon l'invention, la transposition des signaux est suivie par un filtrage 108 dont l'objet est de supprimer des raies d'intermodulation résultant de la transposition de fréquence, comme par exemple, dans le cas d'une transposition avec un signal sinusoïdal à 1050 MHz, un filtre passe-bas ayant une fréquence de coupure de 70MHz.

Enfin, la partie analogique 102 de la chaîne radio 100 selon un mode de réalisation de l'invention comprend un convertisseur analogique-numérique (CAN) 109 configuré pour numériser les signaux IFF et ADS-B transposés. La vitesse d'échantillonnage du CAN est choisie comme étant au minimum deux fois supérieure à la fréquence des signaux transposés la plus élevée, de manière à respecter le théorème de Shannon. Le CAN est choisi de manière à ce que son facteur de bruit soit compatible des performances attendues sur la réception.

La chaîne de réception 100 comprend également une partie numérique 110 configurée pour apporter le supplément de filtrage nécessaire pour la tenue des contraintes normatives, et pour traiter les signaux IFF et ADS-B. Cette partie numérique peut être mise en œuvre sur des moyens de calcul tels que par exemple un microprocesseur, un DSP (sigle anglais pour *Digital Signal Processor*, ou processeur de signal numérique), un FPGA (sigle anglais pour *Field Programmable Gate Array*, ou réseau de portes programmable), un ASIC (acronyme anglais pour *Application-Specific Integrated Circuit*, ou circuit intégré propre à une application), n'importe quelle association de ces moyens, ou n'importe quel composant matériel permettant de réaliser les traitements de la partie numérique 110 décrits par la suite.

Selon un mode de réalisation avantageux de l'invention, la partie numérique 110 est configurée pour mettre en œuvre des traitements optionnels 111 de sur-échantillonnage et d'ajustement de la puissance des signaux reçus. Le sur-échantillonnage des signaux reçus permet de diminuer le rythme d'échantillonnage du CAN 109, et ainsi de réduire sa consommation. L'ajustement de la puissance des signaux permet de positionner leur dynamique au mieux afin d'opérer les traitements ultérieurs dans des dispositions optimales. De manière alternative, le sur-échantillonnage peut être réalisé plus tard dans la partie numérique.

La partie numérique 110 est en outre configurée pour réaliser une duplication 112 des signaux, et pour les traiter selon deux chemins séparés :
- un premier chemin 120, où sont mis en œuvre des traitements permettant l'interprétation des signaux IFF,
- un deuxième chemin 130, où sont mis en œuvre des traitements permettant l'interprétation des signaux ADS-B.

La duplication 112 consiste en une recopie des signaux numérisés (et éventuellement sur-échantillonnés et ajustés en puissance).

Chacun des chemins comprend un dispositif de filtrage 121/131 et un dispositif de transposition de fréquence 122/132.

Les dispositifs de filtrage 121/131 sont configurés pour filtrer le signal autour de la fréquence d'intérêt transposée (la fréquence 20 MHz pour le chemin 120 associé au signal IFF et la fréquence 40 MHz pour le chemin 130 associé au signal ADS-B dans le cas d'un mélange 106 avec un signal sinusoïdal 107 à la fréquence 1050 MHz). Ces filtrages sont complémentaires de ceux réalisés par le filtre analogique 103, et sont définis de manière à ce que ces filtres apportent ensemble les niveaux de rejection définis par les normes DO-260, AIMS 03-1000 et ED73. Ils peuvent être différents sur le chemin IFF 120 et sur le chemin ADS-B 130, et sont adaptés au gabarit spectral des signaux traités sur chaque chemin. En particulier, ils assurent, en complément du filtre bi-bande de tête 103, une réjection supérieure à 60 dB des signaux reçus dans la bande de fréquence 1053 MHz - 1065 MHz.

Dans le cas d'un mélange 106 avec un signal sinusoïdal 107 à la fréquence 1050 MHz, le filtre 121 peut être par exemple un filtre passe-bas rejetant de plus de 30 dB les signaux situés au-delà de la fréquence 25 MHz. De manière similaire, dans le même cas d'application, le filtre 131 peut être par exemple un filtre passe-bande rejetant de plus de 30 dB les signaux situés en dehors d'une bande de fréquence de 50 MHz centrée sur la fréquence 40 MHz.

Les dispositifs de transposition de fréquence 122/132 sont configurés pour transposer les signaux vers des fréquences de travail, c'est-à-dire des fréquences de fonctionnement permettant de mettre en œuvre des traitements ultérieurs d'analyse des signaux. Par exemple, dans le cas d'un mélange 106 avec un signal sinusoïdal à la fréquence 1050 MHz, la fréquence porteuse des signaux pour le chemin 120 associé au signal IFF est de 20 MHz et de 40 MHz pour le chemin 130 associé au signal ADS-B. Le dispositif de transposition de fréquence peut alors prendre la forme d'un démodulateur I/Q, configuré pour transposer les signaux vers la bande de base et les convertir en échantillons IQ. De manière alternative, le dispositif de transposition de fréquence peut être un mélangeur configuré pour transposer les signaux vers une fréquence porteuse adaptée aux traitements des signaux IFF ou ADS-B. Les fréquences de travail du signal IFF et du signal ADS-B ne sont pas nécessairement identiques. Avantageusement, les dispositifs de transposition de fréquence 122 et 132 peuvent être suivis d'un filtre passe-bas 123/133 configuré pour supprimer des raies d'intermodulation liés à la transposition des signaux.

Sur chaque chemin, les positions du dispositif de filtrage 121/131 et du dispositif de transposition de fréquence 122/132 peuvent être inversées. Dans le cas d'une transposition en bande de base, les dispositifs de filtrage 121/131 peuvent être des filtres passe-bas. Cependant, la disposition présentée à la figure 1 est avantageuse puisqu'elle évite l'apparition de raies d'intermodulation liées à la présence du signal ADS-B sur le chemin 120 du signal IFF et inversement.

Enfin, chaque chemin comprend des moyens 124/134 de traitement des échantillons démodulés. Ces traitements ne sont pas décrits ici en détail car ils correspondent aux traitements connus de l'état de l'art permettant le décodage des signaux IFF ou ADS-B, à savoir le calcul de produits d'intercorrélation, la conversion des signaux en signaux vidéo, et la recherche d'impulsions dans ces signaux.

La chaîne de réception selon l'invention permet donc de recevoir des signaux IFF et des signaux ADS-B de manière combinée dans une solution compacte. Elle présente une partie analogique et une partie numérique, configurées pour atteindre ensemble les performances de rejection définies par les normes DO-260 B et C, AIMS 03-1000 et ED73 E et F. Elle se distingue des chaînes de réception de l'état de l'art en ce que la rejection est apportée à la fois par :
- un filtre analogique situé en tête de traitements, destiné à protéger le CAN de signaux pouvant avoir pour effet de le saturer, en particulier des signaux transmis dans la bande de fréquence située entre la bande de fréquence des signaux IFF et la bande de fréquence des signaux ADS-B,
- des filtres numériques situés après le CAN, destinés à apporter le complément de filtrage requis pour permettre les réceptions IFF et ADS-B.

Elle apporte :
- une meilleure gestion de la réception, grâce au déplacement de fonctionnalités de filtrage et de démodulation vers la partie numérique. En effet, les traitements numériques sont plus stables, et il est plus simple d'ajuster des traitements numériques que des composants hardware, et
- une réduction a minima par deux de la surface des fonctions de réceptions IFF et ADS-B, du nombre de composants, du poids, de la consommation et du nombre d'antennes, ce qui est critique pour les petits aéronefs et permet de réduire les coûts.

## Revendications

1. Chaîne de réception (100) configurée pour permettre la réception de signaux IFF reçus dans une bande de fréquence centrée sur la fréquence 1030 MHz et de signaux ADS-B reçus dans une bande de fréquence centrée sur la fréquence 1090 MHz, et pour rejeter au moins une bande de fréquence comprise entre la fréquence 1030 MHz et la fréquence 1090 MHz, caractérisé en qu'elle comprend :
- une antenne de réception (101) configurée pour recevoir un signal radiofréquence dans une bande de fréquence comprenant les fréquences 1030 MHz et 1090 MHz,
- une partie analogique (102) avec :
∘ un dispositif de filtrage bi-bande (103) configuré pour filtrer le signal radiofréquence acquis sur l'antenne de réception en étant passant autour des bandes de fréquences des signaux IFF et ADS-B tout en rejetant ladite bande de fréquence comprise entre la fréquence 1030 MHz et la fréquence 1090 MHz,
∘ un amplificateur faible bruit (104) configuré pour amplifier le signal radiofréquence filtré par ledit dispositif de filtrage bi-bande,
∘ un mélangeur (106) configuré pour mélanger le signal amplifié par l'amplificateur faible bruit avec un signal sinusoïdal (107) de manière à transposer les signaux reçus sur les bandes de fréquence des signaux IFF et ADS-B vers des bandes de fréquences inférieures,
∘ un convertisseur analogique-numérique (109) configuré pour numériser les signaux reçus sur lesdites bandes de fréquences inférieures,
- une partie numérique (110) configurée pour dupliquer le signal numérisé (112) et pour traiter les signaux dupliqués respectivement sur :
∘ un premier chemin (120) comprenant un premier dispositif de filtrage (121) et un premier dispositif de transposition de fréquence (122), configurés pour filtrer et transposer vers une fréquence de travail les signaux reçus autour des bandes de fréquences correspondant aux signaux IFF transposés par ledit mélangeur, et comprenant en outre des moyens de traitement (124) des signaux IFF,
∘ un deuxième chemin (130) comprenant un deuxième dispositif de filtrage (131) et un deuxième dispositif de transposition de fréquence (132), configurés pour filtrer et transposer vers une fréquence de travail les signaux reçus autour des bandes de fréquences correspondant aux signaux ADS-B transposés par ledit mélangeur, et comprenant en outre des moyens de traitement (134) des signaux ADS-B.

2. Chaîne de réception selon la revendication 1, dans lequel ledit dispositif de filtrage bi-bande (103) est un filtre bi-bande.

3. Chaîne de réception selon l'une des revendications précédentes, dans lequel le dispositif de filtrage bi-bande (103) est configuré pour rejeter d'au moins 30dB les signaux reçus dans ladite bande de fréquence comprise entre la fréquence 1030 MHz et la fréquence 1090 MHz.

4. Chaîne de réception selon l'une des revendications précédentes, dans lequel le dispositif de filtrage bi-bande (103), le premier dispositif de filtrage (121) et le deuxième dispositif de filtrage (131) sont configurés pour rejeter ensemble d'au moins 60dB des signaux reçus en dehors des bandes de fréquences de réception des signaux IFF et ADS-B.

5. Chaîne de réception selon l'une des revendications précédentes, dans lequel ladite bande de fréquence comprise entre la fréquence 1030 MHz et la fréquence 1090 MHz comprend la bande de fréquences 1053 MHz - 1065 MHz.

6. Chaîne de réception selon l'une des revendications précédentes, dans lequel ledit signal sinusoïdal (107) utilisé par le mélangeur (106) pour mélanger le signal amplifié par l'amplificateur faible bruit est un signal sinusoïdal dont la fréquence est sensiblement égale à 1050 MHz ou 1070 MHz.

7. Chaîne de réception selon l'une des revendications précédentes, comprenant en outre un ou plusieurs filtres passe-bande ou passe-bas (108, 123, 133) configurés pour rejeter des raies d'intermodulation générées par au moins un parmi le mélangeur (106), le premier dispositif de transposition de fréquence (122) et le deuxième dispositif de transposition de fréquence (132).

8. Chaîne de réception selon l'une des revendications précédentes, comprenant en outre des moyens de suréchantillonnage et d'ajustement du niveau de puissance (111) des signaux numérisés par le convertisseur analogique-numérique (109).

## Patentansprüche

1. Empfangskette (100), die konfiguriert ist, um den Empfang von IFF-Signalen, die in einem auf der Frequenz 1030 MHz zentrierten Frequenzband empfangen werden, und von ADS-B Signalen, die in einem auf der Frequenz 1090 MHz zentrierten Frequenzband empfangen werden, zu erlauben, und um mindestens ein Frequenzband zu verwerfen, das zwischen der Frequenz 1030 MHz und der Frequenz 1090 MHz umfasst ist, **dadurch gekennzeichnet, dass** sie umfasst:
- eine Empfangsantenne (101), die konfiguriert ist, um ein Funkfrequenzsignal in einem Frequenzband zu empfangen, das die Frequenzen 1030 MHz und 1090 MHz umfasst,
- einen analogen Teil (102) mit:
- eine Zweibandfiltervorrichtung (103), die konfiguriert ist, um das auf der Empfangsantenne erfasste Funkfrequenzsignal zu filtern, indem sie um die Frequenzbänder der IFF- und ADS-B-Signale durchlässig ist, und das Frequenzband ablehnt, das zwischen der Frequenz 1030 MHz und der Frequenz 1090 MHz umfasst ist,
- einen rauscharmen Verstärker (104), der konfiguriert ist, um das von der Zweibandfiltervorrichtung gefilterte Funkfrequenzsignal zu verstärken,
- einen Mischer (106), der konfiguriert ist, um das vom rauscharmen Verstärker verstärkte Signal mit einem Sinussignal (107) zu mischen, um die auf den Frequenzbändern der IFF- und ADS-B-Signale empfangenen Signale auf niedrigere Frequenzbänder umzusetzen,
- einen Analog-Digital-Wandler (109), der konfiguriert ist, um die auf den niedrigeren Frequenzbändern empfangenen Signale zu digitalisieren,
- einen digitalen Teil (110), der konfiguriert ist, um das digitalisierte Signal (112) zu duplizieren, und um die duplizierten Signale jeweils zu behandeln auf:
- einem ersten Weg (120), der eine erste Filtervorrichtung (121) und eine erste Frequenzumsetzungsvorrichtung (122) umfasst, die konfiguriert sind, um die empfangenen Signale zu filtern und auf eine Arbeitsfrequenz um die Frequenzbänder herum umzusetzen, die den vom Mischer umgesetzten IFF-Signalen entsprechen, und der weiter Behandlungsmittel (124) für die IFF-Signale umfasst,
- einem zweiten Weg (130), der eine zweite Filtervorrichtung (131) und eine zweite Frequenzumsetzungsvorrichtung (132) umfasst, die konfiguriert sind, um die empfangenen Signale zu filtern und auf eine Arbeitsfrequenz um die Frequenzbänder herum umzusetzen, die den vom Mischer umgesetzten ADS-B-Signalen entsprechen, und der weiter Behandlungsmittel (134) für die ADS-B Signale umfasst.

2. Empfangskette nach Anspruch 1, wobei die Zweibandfiltervorrichtung (103) ein Zweibandfilter ist.

3. Empfangskette nach einem der vorstehenden Ansprüche, wobei die Zweibandfiltervorrichtung (103) konfiguriert ist, um die Signale, die im Frequenzband empfangen werden, das zwischen der Frequenz 1030 MHz und der Frequenz 1090 MHz umfasst ist, um mindestens 30dB zu verwerfen.

4. Empfangskette nach einem der vorstehenden Ansprüche, wobei die Zweibandfiltervorrichtung (103), die erste Filtervorrichtung (121) und die zweite Filtervorrichtung (131) konfiguriert sind, um zusammen um mindestens 60dB Signale zu verwerfen, die außerhalb der Empfangsfrequenzbänder der IFF und ADS-B-Signale empfangen werden.

5. Empfangskette nach einem der vorstehenden Ansprüche, wobei das Frequenzband, das zwischen der Frequenz 1030 MHz und der Frequenz 1090 MHz umfasst ist, das Frequenzband 1053 MHz - 1065 MHz umfasst.

6. Empfangskette nach einem der vorstehenden Ansprüche, wobei das Sinussignal (107), das vom Mischer (106) verwendet wird, um das vom rauscharmen Verstärker verstärkte Signal zu mischen, ein Sinussignal ist, dessen Frequenz im Wesentlichen gleich 1050 MHz oder 1070 MHz beträgt.

7. Empfangskette nach einem der vorstehenden Ansprüche, die weiter einen oder mehrere Bandpassfilter oder Tiefpassfilter (108, 123, 133) umfasst, die konfiguriert sind, um Intermodulationslinien zu verwerfen, die von mindestens einem von dem Mischer (106), der ersten Frequenzumsetzungsvorrichtung (122) und der zweiten Frequenzumsetzungsvorrichtung (132) erzeugt werden.

8. Empfangskette nach einem der vorstehenden Ansprüche, die weiter Mittel zur Überabtastung und Anpassung der Leistungsstufe (111) der von dem Analog-Digital-Wandler (109) digitalisierten Signale umfasst.

## Claims

1. Reception chain (100) configured to allow the reception of IFF signals received in a frequency band centered on the frequency 1030 MHz and of ADS-B signals received in a frequency band centered on the frequency 1090 MHz, and to reject at least one frequency band comprised between the frequency 1030 MHz and the frequency 1090 MHz, **characterized in that** it comprises:
- a reception antenna (101) configured to receive a radiofrequency signal in a frequency band comprising the frequencies 1030 MHz and 1090 MHz,
- an analog part (102) with:
- a two-band filtering device (103) configured to filter the radiofrequency signal acquired on the reception antenna by passing around the frequency bands of the IFF and ADS-B signals while rejecting said frequency band comprised between the frequency 1030 MHz and the frequency 1090 MHz,
- a low-noise amplifier (104) configured to amplify the radiofrequency signal filtered by said two-band filtering device,
- a mixer (106) configured to mix the signal amplified by the low-noise amplifier with a sinusoidal signal (107) so as to transpose the signals received on the frequency bands of the IFF and ADS-B signals to lower frequency bands,
- an analog-digital converter (109) configured to digitize the signals received on said lower frequency bands,
- a digital part (110) configured to duplicate the digitized signal (112) and to process the duplicated signals respectively on:
- a first path (120) comprising a first filtering device (121) and a first frequency transposition device (122), configured to filter and transpose to a working frequency the signals received around frequency bands corresponding to the IFF signals transposed by said mixer, and further comprising IFF signal processing means (124),
- a second path (130) comprising a second filtering device (131) and a second frequency transposition device (132), configured to filter and transpose to a working frequency the signals received around frequency bands corresponding to the IFF signals transposed by said mixer, and further comprising IFF signal processing means (134).

2. Reception chain according to claim 1, wherein said two-band filtering device (103) is a two-band filter.

3. Reception chain according to one of the preceding claims, wherein the two-band filtering device (103) is configured to reject by at least 30dB the signals received in said frequency band comprised between the frequency 1030 MHz and the frequency 1090 MHz.

4. Reception chain according to one of the preceding claims, wherein said two-band filtering device (103), the first filtering device (121) and the second filtering device (131) are configured to reject together at least 60dB of the signals received outside the IFF and ADS-B signal reception frequency bands.

5. Reception chain according to one of the preceding claims, wherein said frequency band comprised between the frequency 1030 MHz and the frequency 1090 MHz comprises the frequency band 1053 MHz - 1065 MHz.

6. Reception chain according to one of the preceding claims, wherein said sinusoidal signal (107) used by the mixer (106) to mix the signal amplified by the low-noise amplifier is a sinusoidal signal the frequency of which is substantially equal to 1050 MHz or 1070 MHz.

7. Reception chain according to one of the preceding claims, further comprising one or several band-pass or low-pass filters (108, 123, 133) configured to reject intermodulation spurs generated by at least one among the mixer (106), the first frequency transposition device (122) and the second frequency transposition device (132).

8. Reception chain according to one of the preceding claims, further comprising means for oversampling and power level adjustment (111) of the signals digitized by the analog-digital converter (109).
